# EUROPÄISCHE PATENTSCHRIFT

(11) **EP 0 996 561 B1**
(45) Veröffentlichungstag und Bekanntmachung des Hinweises auf die Patenterteilung: **11.09.2002**
(21) Anmeldenummer: 98936421.1
(22) Anmeldetag: 14.07.1998
(51) Int. Cl.: B60T 13/14, B60T 13/68, B60T 7/12, B60T 8/18, B60T 8/44

(54) **VOLLHYDRAULISCHE BREMSKRAFTVERSTÄRKER/ -HAUPTZYLINDER- EINHEIT**
FULLY HYDRAULIC SERVOBRAKE / MASTER CYLINDER UNIT
UNITE SERVOFREIN/MAITRE CYLINDRE ENTIEREMENT HYDRAULIQUE

(30) Priorität: 24.07.1997 DE 19731962
(43) Veröffentlichungstag der Anmeldung: 03.05.2000
(73) Patentinhaber: LUCAS INDUSTRIES PUBLIC LIMITED COMPANY, Solihull B90 4LA (GB)
(72) Erfinder: HEIBEL, Helmut, D-56424 Moschheim (DE)
(74) Vertreter: Beyer, Andreas, Dr.
(86) Internationale Anmeldenummer: EP9804362
(87) Internationale Veröffentlichungsnummer: WO99005012

(56) Entgegenhaltungen:
- EP-A- 0 420 175
- WO-A-97/18116
- DE-A- 2 017 185
- DE-A- 2 725 941
- DE-A- 3 832 722
- DE-A- 4 029 114
- US-A- 5 066 077
- PATENT ABSTRACTS OF JAPAN vol. 097, no. 008, 29. August 1997 -& JP 09 099833 A (JIDOSHA KIKI CO LTD), 15. April 1997

## Beschreibung

Die Erfindung betrifft eine vollhydraulische Bremskraftverstärker/Hauptzylinder-Einheit gemäß dem Oberbegriff des Anspruchs 1. Eine solche Bremskraftverstärker/Hauptzylinder-Einheit ist beispielsweise aus der WO 97/18116 bekannt.

Aus der DE 40 29 114 A1 ist eine hydraulische Bremskraftverstärker/Hauptzylinder-Einheit mit einer ersten Verstärkerkammer und einer zweiten Verstärkerkammer bekannt. Im Betrieb wird Hydraulikdruck aus der ersten Verstärkerkammer über ein Druckminderventil, ein Druckregelventil oder ein Wege- oder Absperrventil der zweiten Verstärkerkammer zugeleitet, um bestimmte Kennlinien zu realisieren.

Bei vollhydraulischen Bremskraftverstärker/Hauptzylinder-Einheiten wird im Gegensatz zu den heute noch überwiegend eingesetzten Bremskraftverstärker/Hauptzylinder-Einheiten die Verstärkung der eingeleiteten Betätigungskraft nicht mit Hilfe von Unterdruck, sondern auf rein hydraulischem Wege erreicht. Analog zu herkömmlichen Unterdruck-Bremskraftverstärkern wird die vom Fahrzeugführer üblicherweise über ein Bremspedal eingeleitete Betätigungskraft proportional verstärkt, indem gesteuert durch ein Ventil Hydraulikfluid unter Druck einer Verstärkerkammer zugeführt wird, um den Druckaufbau in der oder den Druckkammern des Hauptzylinders zu unterstützen, die mit den einzelnen Bremskreisen der Fahrzeugbremsanlage verbunden sind. Beim Lösen der Bremse wird diese Verstärkerkammer dann wieder gesteuert durch das genannte Ventil druckentlastet.

Es besteht der Wunsch, vollhydraulische Bremskraftverstärker/Hauptzylinder-Einheiten so auszugestalten, daß die vom Bremskraftverstärker jeweils ausgeübte Verstärkungskraft veränderbar ist, damit beispielsweise eine Anpassung an unterschiedliche Beladungszustände eines Fahrzeuges stattfinden kann. In bestimmten Fahrsituationen kann es auch wünschenswert sein, eine zusätzliche Bremskraft auszuüben, etwa wenn erkannt worden ist, daß die vom Fahrer ausgeübte Betätigungskraft nicht ausreicht, um beispielsweise einen Aufprall auf ein Hindernis zu vermeiden. Der Fahrzeugführer soll allerdings von solchen Eingriffen in das System möglichst wenig merken, um nicht unnötig irritiert zu werden.

Der Erfindung liegt daher die Aufgabe zugrunde, eine Bremskraftverstärker/Hauptzylinder-Einheit bereitzustellen, bei der die Bremskraftverstärkung den jeweils vorherrschenden Betriebsbedingungen und Bremssituationen anpaßbar ist, ohne daß ein Fahrzeugführer dies in störender Weise wahrnimmt.

Diese Aufgabe ist ausgehend von der eingangs genannten Bremskraftverstärker/Hauptzylinder-Einheit dadurch gelöst, daß zusätzlich zur ersten Verstärkerkammer eine zweite Verstärkerkammer vorhanden ist, der unabhängig von der ersten Verstärkerkammer Hydraulikfluid unter Druck zuführbar ist. In konstruktiv besonders vorteilhafter Weise ist die zweite Verstärkerkammer mittels eines in der Bohrung der Bremskraftverstärker/Hauptzylinder-Einheit abdichtend und schwimmend angeordneten Hilfskolbens realisiert, dessen eine Stirnwand eine weitere Begrenzungswand der ersten Verstärkerkammer und dessen gegenüberliegende, andere Stirnwand eine Begrenzungswand der zweiten Verstärkerkammer bildet.

Während die erste Verstärkerkammer in üblicher Weise mit Hydraulikfluid unter Druck versorgt wird, um die vom Fahrzeugführer eingeleitete Betätigungskraft wie gewohnt zu verstärken, kann durch Zuführen von Hydraulikfluid unter Druck in die zweite Verstärkerkammer die Bremskraft bedarfsabhängig verstärkt werden, beispielsweise in Abhängigkeit vorgegebener Parameter wie etwa dem Beladungszustand, dem noch zur Verfügung stehenden Anhalteweg etc., ohne daß der Fahrer dies bemerkt, da eine Bremskraftrückmeldung nur über die erste Verstärkerkammer erfolgt. So läßt sich beispielsweise eine Fahrzeugbremsanlage realisieren, bei der eine bestimmte, vom Fahrer eingeleitete Betätigungskraft unabhängig von der Fahrzeugbeladung immer dieselbe Fahrzeugverzögerung bewirkt. Hierzu wird entsprechend der Beladung des Fahrzeuges zusätzliche Bremskraftunterstützung durch Einleiten von Hydraulikfluid unter Druck in die zweite Verstärkerkammer bereitgestellt, so daß der Fahrer durch seine Betätigungskraft eine Fahrzeugverzögerung erhält, die immer derjenigen entspricht, die er bei unbeladenem Fahrzeug mit dieser Betätigungskraft erhalten würde. Mittels der zweiten Verstärkerkammer können auch vollautomatische Bremsungen durchgeführt werden, wie sie beispielsweise im Zusammenhang mit neuerdings propagierten Abstandsregelungssystemen erforderlich sind. Durch Niederdrücken des Bremspedals kann ein Fahrzeugführer dennoch in gewohnter Weise in eine solche, automatisch ablaufende Bremsung eingreifen, beispielsweise um sie zu verstärken.

In einer bevorzugten Ausführungsform der erfindungsgemäßen Bremskraftverstärker/Hauptzylinder-Einheit steuert ein von einer Verschiebung des Eingangsgliedes der Bremskraftverstärker/Hauptzylinder-Einheit unabhängiges Ventil die Zufuhr von unter Druck stehendem Hydraulikfluid zur zweiten Verstärkerkammer. Vorteilhaft ist dieses Ventil ein insbesondere als Proportionalventil ausgebildetes Elektromagnetventil.

Gemäß einer Weiterbildung der Erfindung erkennt ein mit dem genannten Eingangsglied zusammenwirkender Löseschalter das Ende einer Betätigung der Bremskraftverstärker/Hauptzylinder-Einheit und das die Zufuhr von unter Druck stehendem Hydraulikfluid zur zweiten Verstärkerkammer steuernde Ventil nimmt daraufhin eine Stellung ein, in der der in der zweiten Verstärkerkammer vorhandene Druck abgebaut wird.

Bei bevorzugten Ausführungsformen der erfindungsgemäßen Bremskraftverstärker/Hauptzylinder-Einheit erfaßt ein erster Drucksensor den Druck in der ersten Druckkammer (Primärdruckkammer) des Hauptzylinders und ein zweiter Drucksensor erfaßt den Druck in der ersten Verstärkerkammer. Durch Auswertung der Signale dieser Drucksensoren läßt sich beispielsweise bestimmen, ob die mittels der ersten Verstärkerkammer bereitgestellte Bremskraftunterstützung zur Erzielung einer gewünschten Verzögerung ausreichend ist.

Alle Ausführungsformen der erfindungsgemäßen Bremskraftverstärker/Hauptzylinder-Einheit arbeiten vorteilhaft mit einem elektronischen Steuergerät zusammen, welches das Ventil ansteuert, das die Zufuhr von unter Druck stehendem Hydraulikfluid zur zweiten Verstärkerkammer steuert. Vorzugsweise wird das Steuergerät das genannte Ventil unter anderem in Abhängigkeit von Signalen des Löseschalters und/oder der Drucksensoren steuern. Selbstverständlich kann das Steuergerät auch die Ansteuerung desjenigen Ventils übernehmen, beispielsweise in Zusammenarbeit mit einem Pedalwegsensor, das die Zufuhr von Hydraulikdruck zur ersten Verstärkerkammer steuert.

Ein Ausführungsbeispiel der erfindungsgemäßen Bremskraftverstärker/Hauptzylinder-Einheit wird im folgenden anhand der einzigen, schematischen Figur näher erläutert.

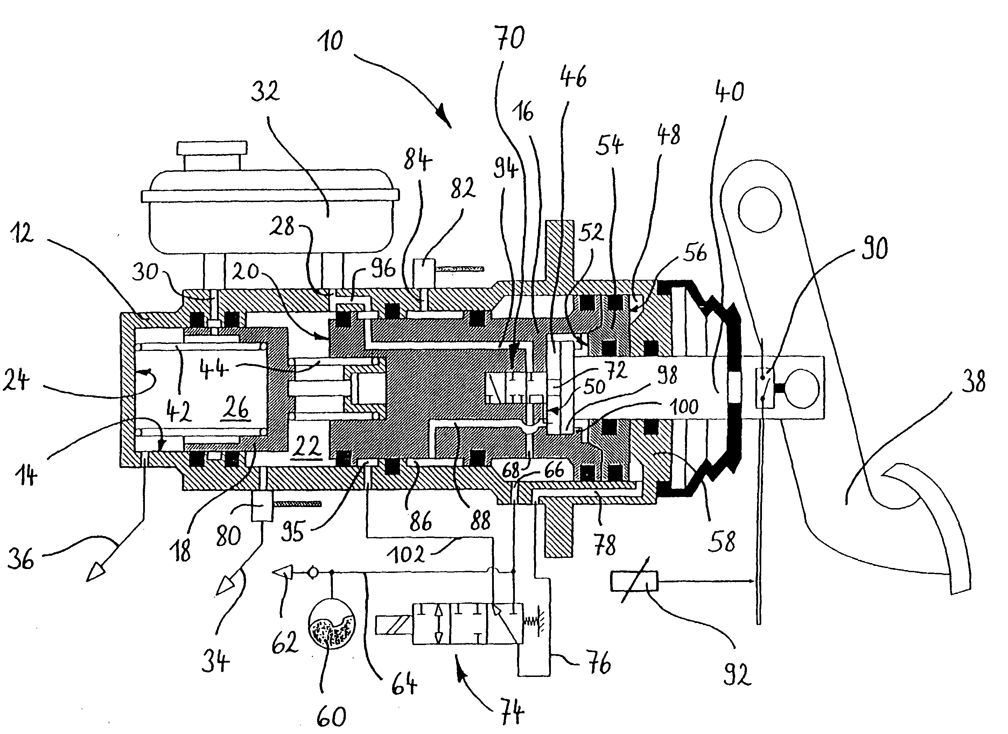

Die Figur zeigt eine allgemein mit 10 bezeichnete, vollhydraulische Bremskraftverstärker/Hauptzylinder-Einheit für eine hydraulische Fahrzeugbremsanlage. Die Einheit 10 hat ein längliches Gehäuse 12 mit einer darin ausgebildeten, gestuften Bohrung 14. In der Bohrung 14 sind ein Primärkolben 16 und ein Sekundärkolben 18 abdichtend und verschieblich angeordnet. Eine Stirnwand 20 des Primärkolbens 16 begrenzt zusammen mit der ihr zugewandten Stirnwand des Sekundärkolbens 18 und der Bohrung 14 eine erste Druckkammer 22, während der hier hohl ausgebildete Sekundärkolben 18 mit der Bohrung 14 und deren Stirnwand 24 eine zweite Druckkammer 26 begrenzt. Beide Druckkammern 22 und 26 stehen über Leitungen 28 bzw. 30 mit einem Vorratsbehälter 32 für Hydraulikfluid in Verbindung. Die erste Druckkammer 22 ist mittels einer nur schematisch angedeuteten Leitung 34 zur Verbindung mit einem ersten Bremskreis der hydraulischen Fahrzeugbremsanlage bestimmt, während die zweite Druckkammer 26 über eine ebensolche Leitung 36 zur Verbindung mit einem zweiten Bremskreis der Fahrzeugbremsanlage bestimmt ist.

Über ein Bremspedal 38 und ein daran angelenktes, stangenförmiges Eingangsglied 40 kann ein Fahrzeugführer zur Einleitung einer Bremsung eine Betätigungskraft auf den Primärkolben 16 ausüben. Diese Betätigungskraft führt zu einer Verschiebung des Primärkolbens 16 nach links und somit, nachdem die Zulauf- bzw. Rücklaufleitung 28 vom Primärkolben 16 verschlossen worden ist, zu einer Druckerhöhung des in der ersten Druckkammer 22 enthaltenen Hydraulikfluids. Diese Druckerhöhung sorgt für eine ebenfalls nach links gerichtete Verschiebung des Sekundärkolbens 18, so daß sich auch in der zweiten Druckkammer 26 der Hydraulikdruck entsprechend erhöht, nachdem die Zulauf- und Rücklaufleitung 30 durch die Verschiebung des Sekundärkolbens 18 verschlossen worden ist. Der erhöhte Hydraulikdruck aus der ersten Druckkammer 22 und der zweiten Druckkammer 26 wird über die Leitungen 34 und 36 in die beiden Bremskreise eingespeist.

Nach Beendigung einer Bremsung, d.h., nachdem der Fahrzeugführer den Fuß vom Bremspedal 38 genommen hat, sorgen Rückstellfedern 42 und 44 dafür, daß sowohl der Sekundärkolben 18 als auch der Primärkolben 16 wieder in ihre in der Figur dargestellten Ausgangsstellungen zurückbewegt werden, in der die Fluidverbindung zwischen den beiden Druckkammern 22, 26 und dem Vorratsbehälter 32 geöffnet ist.

Um die vom Fahrzeugführer über das Eingangsglied 40 eingeleitete Betätigungskraft verstärken zu können, sind in der Bohrung 14 der Bremskraftverstärker/Hauptzylinder-Einheit 10 eine erste Verstärkerkammer 46 und eine zweite Verstärkerkammer 48 angeordnet. Die erste Verstärkerkammer 46 wird von der der einen Stirnwand 20 gegenüberliegenden, anderen Stirnwand 50 des Primärkolbens 16 und von einer gegenüberliegenden Stirnwand 52 eines später noch näher erläuterten Hilfskolbens 54 sowie, bei einer Verschiebung des Primärkolbens 16 relativ zum Hilfskolben 54, von der Bohrung 14 begrenzt. Die zweite Verstärkerkammer 48 wird von der der Stirnwand 52 gegenüberliegenden, anderen Stirnwand 56 des Hilfskolbens 54, der Bohrung 14 und von einem in der Figur nicht als separates Teil dargestellten Bohrungsverschluß 58 begrenzt. Das Eingangsglied 40 durchsetzt abdichtend und verschieblich sowohl den Bohrungsverschluß 58 als auch den Hilfskolben 54, der seinerseits abdichtend und schwimmend in der Bohrung 14 aufgenommen ist.

Der ersten Verstärkerkammer 46 kann aus einem Druckspeicher 60, der bei 62 mit einer hier nicht dargestellten Pumpe in Fluidverbindung steht, die den Druck im Druckspeicher 60 auf einem vorbestimmten Wert hält, über eine Verbindungsleitung 64, einen Einlaß 66 und eine im Primärkolben 16 vorhandene Leitung 68 Hydraulikfluid unter Druck zugeführt werden. Die Druckzufuhr wird im gezeigten Ausführungsbeispiel von einem mechanischen Ventil 70 mit drei Schaltstellungen gesteuert, das zentrisch im Primärkolben 16 aufgenommen ist und das über einen Stift 72 mechanisch mit dem Eingangsglied 40 zur gemeinsamen Bewegung gekoppelt ist. Die drei Schaltstellungen des Ventils 70 sind eine Druckaufbaustellung, eine Druckhaltestellung und eine Druckabbaustellung.

Auch der zweiten Verstärkerkammer 48 kann Hydraulikfluid unter Druck aus dem Druckspeicher 60 zugeführt werden. Gesteuert wird die Druckzufuhr zur zweiten Verstärkerkammer 48 von einem Elektromagnetventil 74, das ebenfalls drei Schaltstellungen (Druckaufbaustellung, Druckhaltestellung und Druckabbaustellung) aufweist und das über die Verbindungsleitung 64 in Fluidverbindung mit dem Druckspeicher 60 und über eine Zuführleitung 76 in Fluidverbindung mit einem Einlaß 78 der zweiten Verstärkerkammer 48 steht.

Ein erster Drucksensor 80 ist in der Leitung 28 angeordnet und mißt den in der ersten Druckkammer 22 herrschenden Hydraulikdruck. Ein zweiter Drucksensor 82 steht über eine die Wand des Gehäuses 12 durchsetzende Querbohrung 84, einen Ringraum 86 zwischen dem Primärkolben 16 und der Bohrung 14, und eine durch den Primärkolben 16 verlaufende Leitung 88 in Fluidverbindung mit der ersten Verstärkerkammer 46, um den in letzterer herrschenden Hydraulikdruck messen zu können.

Im Bereich des aus der Bremskraftverstärker/Hauptzylinder-Einheit 10 herausragenden, freien Endes des Eingangsgliedes 40 befinden sich ein mit dem Bremspedal 38 zusammenwirkender Löseschalter 90 sowie ein Pedalwegsensor 92. Der Löseschalter 90 erfaßt, wenn das Bremspedal 38 freigegeben, d.h. gelöst wird, während der Pedalwegschalter 92 den Betätigungsweg des Eingangsgliedes 40 mißt.

Das Elektromagnetventil 74, die beiden Drucksensoren 80 und 82, der Löseschalter 90 sowie der Pedalwegsensor 92 stehen in elektrischer Verbindung mit einem hier nicht dargestellten elektronischen Steuergerät, das die Signale der Drucksensoren 80, 82, des Löseschalters 90 und des Pedalwegsensors 92 verarbeitet und in Abhängigkeit dieser Signale das Elektromagnetventil 74 steuert.

Es wird nun die Funktion der dargestellten Bremskraftverstärker/Hauptzylinder-Einheit 10 erläutert, wobei zunächst eine sogenannte "normale" Bremsung beschrieben wird, d.h. eine Bremsung, bei der die zweite Verstärkerkammer 48 funktionslos bleibt. Betätigt der Fahrzeugführer im Rahmen einer solchen "normalen" Bremsung das Bremspedal 38, so wird diese Bewegung über das Eingangsglied 40 auf das damit verbundene, mechanische Steuerventil 70 übertragen, das dadurch relativ zum Primärkolben 16 in seine in der Figur wiedergegebene Druckaufbaustellung verschoben wird, in der ein Zufluß von unter Druck stehendem Hydraulikfluid aus dem Druckspeicher 60 über die Verbindungsleitung 64. den Einlaß 66, die Leitung 68 und das Ventil 70 in die erste Verstärkerkammer 46 stattfinden kann. Ist der zur jeweiligen Pedalbetätigungskraft proportionale Verstärkungsdruck in der ersten Verstärkerkammer 46 erreicht, führt die Kraft-rückwirkung über die hydraulisch wirksame Fläche des Eingangsgliedes 40 in der ersten Verstärkerkammer 46 zu einer Relativverschiebung zwischen dem Steuerventil 70 und dem Primärkolben 16 derart, daß das Ventil 70 seine Druckhaltestellung einnimmt, in der die erste Verstärkerkammer 46 gegenüber einem Zufluß oder Abfluß von Hydraulikfluid abgesperrt ist. Es wirkt nun die über das Bremspedal 38 eingeleitete Betätigungskraft zusammen mit der durch den erhöhten Hydraulikdruck in der ersten Verstärkerkammer 46 erzeugten Kraft auf den Primärkolben 16, was zu einem entsprechenden Druck in den beiden Druckkammern 22 und 26 und damit zu einer entsprechenden Bremskraft an denjenigen Radbremsen führt, die mit den beiden Druckkammern 22 und 26 in Fluidverbindung stehen. Soll die Bremskraft erhöht werden, wird der Fahrzeugführer das Bremspedal 38 stärker betätigen, woraufhin das Steuerventil 70 erneut relativ zum Primärkolben 16 verschoben wird und seine Druckaufbaustellung wieder einnimmt, so daß weiteres Hydraulikfluid unter Druck in die erste Verstärkerkammer 46 strömen kann. Nach Erreichen der dieser Betätigungskraft entsprechenden Gleichgewichtsstellung nimmt das Ventil 70 wie zuvor seine Druckhaltestellung ein. Die beschriebene, direkte Proportionalität der Verstärkung der Pedalbetätigungskraft ermöglicht eine gute Dosierbarkeit der Bremsanlage, die beispielsweise dazu erforderlich ist, um an einem bestimmten, gewünschten Punkt zum Stehen zu kommen. Während des gesamten, zuvor beschriebenen Ablaufs bleibt der Hilfskolben 54 in der dargestellten Position, d.h. das Eingangsglied 40 und der Primärkolben 16 verschieben sich relativ zum Hilfskolben 54 nach links.

Nach Beendigung des Bremsvorganges läßt der Fahrzeugführer das Bremspedal 38 los, wodurch sich das Steuerventil 70 relativ zum Primärkolben 16 in seine Druckabbaustellung verschiebt, in der es die Leitung 68 sperrt und statt dessen über eine durch den Primärkolben 16 verlaufende Leitung 94, einen radialen Ringraum 95 zwischen dem Primärkolben 16 und der Bohrung 14, und einen Rücklaufanschluß 96 eine Fluidverbindung zwischen der ersten Verstärkerkammer 46 und dem Vorratsbehälter 32 herstellt. Die erste Verstärkerkammer 46 wird auf diese Weise druckentlastet.

Es sei an dieser Stelle darauf hingewiesen, daß entgegen der Darstellung in der Figur ein radialer Vorsprung 98 an dem Ende des Eingangsgliedes 40, das sich in der ersten Verstärkerkammer 46 befindet, erst dann an einem Anschlag 100 des Primärkolbens 16 zur Anlage kommt, wenn das Steuerventil 70 seine Druckabbaustellung einnimmt.

Es wird nun der Fall einer zusätzlichen Bremskraftverstärkung mittels der zweiten Verstärkerkammer 48 beschrieben. Der Beginn einer solchen Bremsung mit erhöhter Bremskraftverstärkung verläuft zunächst wie zuvor beschrieben, d.h. das Steuerventil 70 wird in seine Druckaufbaustellung verschoben und Hydraulikfiuid unter Druck strömt in die erste Verstärkerkammer 46 ein, bis sich nach Erreichen der zugehörigen Gleichgewichtsstellung das Steuerventil 70 in seine Druckhaltestellung begibt. Erkennt das nicht dargestellte, elektronische Steuergerät anhand einer Auswertung der ihm zugeführten Signale beispielsweise, daß der durch die Pedalbetätigungskraft und den Hydraulikdruck in der ersten Verstärkerkammer 46 erzeugte Druck in der ersten Druckkammer 22 nicht ausreicht, um eine bestimmte Fahrzeugverzögerung zu erzielen, die normalerweise mit diesem Bremsdruck erzielt wird, steuert es das Elektromagnetventil 74 in dessen Druckaufbaustellung, so daß Hydraulikfluid unter Druck aus dem Druckspeicher 60 über das Elektromagnetventil 74, die Zuführleitung 76 und den Einlaß 78 in die zweite Verstärkerkammer 48 fließen kann. Die Druckerhöhung in der zweiten Verstärkerkammer 48 führt zu einer Verschiebung des Hilfskolbens 54 nach links und damit zu einer überlagerten Kraftverstärkung, die auf den Primärkolben 16 übertragen wird und damit zu einer entsprechenden Druckerhöhung in der ersten Druckkammer 22 und der zweiten Druckkammer 26 führt. Die Verschiebung des Hilfskolbens 54 nach links hat keine merkliche Druckerhöhung in der ersten Verstärkerkammer 46 zur Folge, denn das Steuerventil 70 bewegt sich aufgrund der während der Verschiebung des Hilfskolbens 54 im Inneren der Bremskraftverstärker/Hauptzylinder-Einheit 10 ablaufenden, dynamischen Vorgänge kurzzeitig in seine Druckabbaustellung, bis der Hilfskolben 54 sich an den Primärkolben 16 anlegt. Der Druckspeicher 60 ist so dimensioniert, daß die entsprechende Menge an Hydraulikfluid, die zur beschriebenen Verschiebung des Hilfskolbens 54 in die zweite Verstärkerkammer 48 eingeleitet werden muß, schnell und ohne merklichen Druckverlust zugeführt werden kann.

Stellt der erste Drucksensor 80 fest, daß in der ersten Druckkammer 22 der gewünschte, zur Erzielung einer bestimmten Fahrzeugverzögerung erforderliche Bremsdruck erreicht ist, schaltet das mit ihm verbundene, elektronische Steuergerät das Elektromagnetventil 74 in die Druckhaltestellung, in der die zweite Verstärkerkammer 48 gegenüber einem Zufluß oder Abfluß von Hydraulikfluid abgesperrt ist. Von der auf diese Weise erzielten, zusätzlichen Bremskraftverstärkung merkt der Fahrzeugführer nichts, denn die Kraftrückwirkung auf das Bremspedal 38 findet nur über die hydraulisch wirksame Fläche des Eingangsgliedes 40 in der ersten Verstärkerkammer 46 statt.

Gibt der Fahrzeugführer schließlich das Bremspedal 38 nach Beendigung der Bremsvorganges frei, wird diese Freigabe vom Löseschalter 90 registriert, woraufhin das mit ihm in Verbindung stehende, elektronische Steuergerät das Elektromagnetventil 74 in die Druckabbaustellung schaltet, in der über den Einlaß 78, die Zuführleitung 76, das Elektromagnetventil 74, eine Rückführleitung 102, den Ringraum 95 und den Rücklaufanschluß 96 eine Fluidverbindung zum Vorratsbehälter 32 hergestellt ist, um die zweite Verstärkerkammer 48 vom Hydraulikdruck zu entlasten. Diese Druckabbaustellung ist die Grundstellung des Elektromagnetventils 74, in die es federnd vorgespannt ist und die es auch immer dann einnimmt, wenn eine zusätzliche Bremskraftverstärkung mittels der zweiten Verstärkerkammer 48 nicht benötigt wird.

Aus dem Vorstehenden ist ersichtlich, daß das für die Drucksteuerung der ersten Verstärkerkammer 46 zuständige Steuerventil 70 mechanisch und betätigungswegabhängig arbeitet, während das für die Drucksteuerung der zweiten Verstärkerkammer 48 zuständige Elektromagnetventil 74 betätigungswegunabhängig und unabhängig vom Steuerventil 70 arbeitet.

Neben der zuvor beschriebenen Verwendung der zweiten Verstärkerkammer 48 in Verbindung mit der ersten Verstärkerkammer 46 kann das elektronische Steuergerät durch Ansteuerung des Elektromagnetventils 74 und entsprechende Zufuhr von Hydraulikfluid unter Druck in die zweite Verstärkerkammer 48 auch vollständig automatisch, d.h. ohne eine Betätigung durch den Fahrzeugführer ablaufende Bremsungen durchführen, beispielsweise im Zusammenwirken mit einem Abstandsregelungssystem. Da die erste Verstärkerkammer 46 bei solchen automatisch ablaufenden Bremsungen drucklos bleibt, kann der Fahrzeugführer ohne weiteres in die automatische Bremsung eingreifen und durch Betätigen des Bremspedals 38 und entsprechende Verschiebung des Steuerventils 70 in die Druckaufbaustellung eine verstärkte Bremsung einleiten.

Das dargestellte Ausführungsbeispiel mit dem schwimmend angeordneten Hilfskolben 54 bietet den Vorteil, daß existierende Bremskraftverstärker/Hauptzylinder-Einheiten mit nur einer Verstärkerkammer ohne tiefgreifende Änderung der vorhandenen Konstruktion mit einer zweiten Verstärkerkammer versehen werden können. Das Vorhandensein einer zweiten Verstärkerkammer hat neben den bereits beschriebenen Vorteilen den weiteren Vorteil, daß bei einem Ausfall des mit dem Eingangsglied 40 gekoppelten Steuerventils 70 die Verstärkungsfunktion für den "normalen" Bremsbetrieb durch eine entsprechende Ansteuerung des Elektromagnetventils 74 unter Zuhilfenahme der zweiten Verstärkerkammer 48 vorgenommen werden kann. Die zweite Verstärkerkammer 48 stellt demnach eine Ausfallsicherung dar (sogenannte Fail-Safe-Funktion).

Obwohl hier nicht gesondert beschrieben, braucht das Steuerventil 70 nicht mechanisch über das Eingangsglied 40 betätigt zu werden, es könnte alternativ ohne weiteres durch die Nutzung der durch den Pedalwegsensor 92 bereitgestellten Information auch von dem elektronischen Steuergerät angesteuert werden.

## Patentansprüche

1. Vollhydraulische Bremskraftverstärker/Hauptzylinder-Einheit (10) für eine Fahrzeugbremsanlage, mit
- einem Gehäuse (12) und einer darin ausgebildeten Bohrung (14), in der ein Primärkolben (16) abdichtend und verschieblich angeordnet ist, der mit einem Eingangsglied (40) zur Übertragung einer Betätigungskraft auf den Primärkolben (16) gekoppelt ist,
- einer in der Bohrung (14) angeordneten, ersten Druckkammer (22), deren eine Begrenzungswand durch eine Stirnwand (20) des Primärkolbens (16) gebildet ist, und
- einer in der Bohrung (14) angeordneten, ersten Verstärkerkammer (46), deren eine Begrenzungswand von der der einen Stirnwand (20) gegenüberliegenden, anderen Stirnwand (50) des Primärkolbens (16) gebildet ist, mit einem Einlaß für Hydraulikfluid unter Druck zur Verstärkung der Betätigungskraft,
**dadurch gekennzeichnet, daß**
- in der Bohrung (14) eine zweite Verstärkerkammer (48) angeordnet ist, der unabhängig von der ersten Verstärkerkammer (46) Hydraulikfluid unter Druck zuführbar ist.

2. Bremskraftverstärker/Hauptzylinder-Einheit nach Anspruch 1,
**dadurch gekennzeichnet, daß** ein in der Bohrung (14) abdichtend und schwimmend angeordneter Hilfskolben (54) mit seiner einen Stirnwand (52) eine weitere Begrenzungswand der ersten Verstärkerkammer (46) bildet, dessen gegenüberliegende, andere Stirnwand (56) eine Begrenzungswand der zweiten Verstärkerkammer (48) bildet.

3. Bremskraftverstärker/Hauptzylinder-Einheit nach Anspruch 1 oder 2,
**dadurch gekennzeichnet, daß** ein von einer Verschiebung des Eingangsgliedes (40) unabhängiges Ventil (74) die Zufuhr von unter Druck stehendem Hydraulikfluid zur zweiten Verstärkerkammer (48) steuert.

4. Bremskraftverstärker/Hauptzylinder-Einheit nach Anspruch 3,
**dadurch gekennzeichnet, daß** das Ventil (74) ein vorzugsweise als Proportionalventil ausgebildetes Elektromagnetventil ist.

5. Bremskraftverstärker/Hauptzylinder-Einheit nach Anspruch 3 oder 4,
**dadurch gekennzeichnet, daß** ein mit dem Eingangsglied (40) zusammenwirkender Löseschalter (90) das Ende einer Betätigung der Bremskraftverstärker/Hauptzylinder-Einheit erkennt und daraufhin das Ventil (74) eine Druckabbaustellung einnimmt, in der der in der zweiten Verstärkerkammer (48) vorhandene Druck abgebaut wird.

6. Bremskraftverstärker/Hauptzylinder-Einheit nach einem der Ansprüche 3 bis 5,
**dadurch gekennzeichnet, daß** ein erster Drucksensor (80) den Druck in der ersten Druckkammer (22) und ein zweiter Drucksensor (82) den Druck in der ersten Verstärkerkammer (46) erfaßt.

7. Bremskraftverstärker/Hauptzylinder-Einheit nach einem der Ansprüche 5 oder 6,
**dadurch gekennzeichnet, daß** ein elektronisches Steuergerät das Ventil (74) in Abhängigkeit von Signalen des Löseschalters (90) und/oder der Drucksensoren (80, 82) steuert.

## Claims

1. A fully hydraulic brake booster/master cylinder unit (10) for a vehicle brake system, comprising
- a housing (12) and a bore (14) formed therein in which a primary piston (16) is sealingly and displaceably arranged which is coupled to an input member (40) for transmitting an actuating force to the primary piston (16),
- a first pressure chamber (22) which is arranged in the bore (14) and one boundary wall of which is formed by one end wall (20) of the primary piston (16), and
- a first booster chamber (46) which is arranged in the bore (14) and one boundary wall of which is formed by the other end wall (50), located opposite the one end wall (20), of the primary piston (16), having an inlet for hydraulic fluid under pressure in order to boost the actuating force,
**characterised in that**
- a second booster chamber (48) is arranged in the bore (14), to which booster chamber (48) hydraulic fluid under pressure can be supplied, independently of the first booster chamber (46).

2. The brake booster/master cylinder unit according to Claim 1, **characterised in that** an auxiliary piston (54) which is arranged sealingly and floatingly in the bore (14) forms with its one end wall (52) a further boundary wall of the first booster chamber (46), the opposite other end wall (56) of said auxiliary piston (54) forming a boundary wall of the second booster chamber (48).

3. The brake booster/master cylinder unit according to Claim 1 or 2, **characterised in that** a valve (74) independent of a displacement of the input member (40) controls the supply of pressurised hydraulic fluid to the second booster chamber (48).

4. The brake booster/master cylinder unit according to Claim 3, **characterised in that** the valve (74) is an electromagnetic valve preferably designed as a proportional valve.

5. The brake booster/master cylinder unit according to Claim 3 or 4, **characterised in that** a release switch (90) cooperating with the input member (40) detects the end of actuation of the brake booster/master cylinder unit and the valve (74) thereupon assumes a pressure reduction position, in which the pressure present in the second booster chamber (48) is reduced.

6. The brake booster/master cylinder unit according to one of Claims 3 to 5, **characterised in that** a first pressure sensor (80) detects the pressure in the first pressure chamber (22) and a second pressure sensor (82) detects the pressure in the 'first booster chamber (46).

7. The brake booster/master cylinder unit according to one of Claims 5 or 6, **characterised in that** an electronic control apparatus controls the valve (74) as a function of signals from the release switch (90) and/or from the pressure sensors (80, 82).

## Revendications

1. Unité amplificatrice de force de freinage/de maître-cylindre (10) tout hydraulique, pour une installation de freinage pour véhicules, comportant:
- un boîtier (12) dans lequel est ménagé un perçage (14) dans lequel est disposé, de façon étanche et coulissante, un piston primaire (16) qui est couplé à un organe d'entrée (40) pour assurer la transmission d'une force d'actionnement au piston primaire (16),
- une première chambre de pression (22), ménagée dans le perçage (14), dont une paroi de délimitation est formée par une paroi frontale (20) du piston primaire (16), et
- une première chambre d'amplification (46), disposée dans le perçage (14), dont une paroi de délimitation est formée par l'autre paroi frontale (50), opposée à la première paroi frontale (20), du piston primaire (16), avec une admission pour un fluide hydraulique sous pression, afin d'amplifier la force d'actionnement, **caractérisé en ce que**
- dans le perçage (14) est ménagée une deuxième chambre d'amplification (48) à laquelle du fluide hydraulique peut être amené sous pression, indépendamment de la première chambre d'amplification (46).

2. Unité amplificatrice de force de freinage/de maître-cylindre selon la revendication 1, **caractérisée en ce qu'**un piston auxiliaire (54), disposé de façon étanche et flottante dans le piston (14), forme, par sa première paroi frontale (52), une autre paroi de délimitation de la première chambre d'amplification (46) et dont l'autre paroi frontale (56), opposée, forme une paroi de délimitation de la deuxième chambre d'amplification (48).

3. Unité amplificatrice de force de freinage/de maître-cylindre selon la revendication 1 ou 2, **caractérisée en ce qu'**une soupape (74), indépendante d'un coulissement de l'organe d'entrée (40), commande l'amenée de fluide hydraulique sous pression à la deuxième chambre d'amplification (48).

4. Unité amplificatrice de force de freinage/de maître-cylindre selon la revendication 3, **caractérisée en ce que** la soupape (74) est une électrovanne, réalisée de préférence sous la forme de soupape proportionnelle.

5. Unité amplificatrice de force de freinage/de maître-cylindre selon la revendication 3 ou 4, **caractérisée en ce qu'**un interrupteur de déclenchement (90), coopérant avec l'organe d'entrée (40), identifie la fin d'un actionnement de l'unité amplificatrice de force freinage/de maître-cylindre et, suite à cela, la soupape (74) prend une position d'annulation de pression, à laquelle la pression existant dans la deuxième chambre d'amplification (48) est annulée.

6. Unité amplificatrice de force de freinage/de maître-cylindre selon l'une des revendications 3 à 5, **caractérisée en ce qu'**un premier capteur de pression (80) détecte la pression régnant dans la première chambre de pression (62), et un deuxième capteur de pression (82) détecte la pression régnant dans la première chambre d'amplification (46).

7. Unité amplificatrice de force de freinage/de maître-cylindre selon l'une des revendications 5 ou 6, **caractérisée en ce qu'**un appareil de commande électronique commande la soupape (74) en fonction de signaux émanant de l'interrupteur de déclenchement (90) et/ou des capteurs de pression (80, 82).
